## Europäisches Patentamt

## European Patent Office

## Office européen des brevets

(11) Veröffentlichungsnummer: **0 129 101**
**B1**

(12) # EUROPÄISCHE PATENTSCHRIFT

(45) Veröffentlichungstag der Patentschrift: 04.04.90

(51) Int. Cl.⁵: **A 01 K 1/00, F 28 F 9/00**

(21) Anmeldenummer: **84105994.2**

(22) Anmeldetag: **25.05.84**

(54) Kombinierte Wärmetausch- und Lüftungsvorrichtung.

(30) Priorität: **18.06.83 DE 8317777 u**

(43) Veröffentlichungstag der Anmeldung:
**27.12.84 Patentblatt 84/52**

(45) Bekanntmachung des Hinweises auf die
Patenterteilung:
**04.04.90 Patentblatt 90/14**

(84) Benannte Vertragsstaaten:
**AT BE CH DE FR GB IT LI LU NL SE**

(56) Entgegenhaltungen:
EP-A-0 106 259
DE-A-2 513 505
DE-A-2 842 974
DE-A-2 939 827
DE-A-3 017 166
DE-A-3 139 772
FR-A-2 175 796
US-A-4 336 748

KLIMAAT BEHEERSING, Band 10, Nr. 10,
Oktober 1981, Seite 590, Misset BV,
Doetinchem, Zeist, NL; A. VOSTERMANS:
"Warmteterugwinnings-apparaat voor
veestallen"

(73) Patentinhaber: **Penzkofer, Ludwig**
**Gartenstrasse 4**
**D-8448 Leiblfing (DE)**

(73) Patentinhaber: **Schönhammer, Johann**
**Niederreuth 131**
**D-8317 Mengkofen (DE)**

(72) Erfinder: **Schönhammer, Johann**
**Niederreuth 131**
**D-8317 Mengkofen (DE)**

(74) Vertreter: **Wasmeier, Alfons, Dipl.-Ing. et al**
**Postfach 382 Greflingerstrasse 7**
**D-8400 Regensburg (DE)**

Courier Press, Leamington Spa, England.

**Beschreibung**

Die Erfindung bezieht sich auf eine im Gegenstromprinzip arbeitende Wärmetausch- und Lüftungsvorrichtung mit den Merkmalen des Oberbegriffes des Anspruches 1.

Eine derartige Vorrichtung ist aus der DE-OS 29 39 827 bekannt, bei der der Abluftschacht ein von unterhalb des Stallbodens bis über das Dach hinaus durchgehendes vertikales Zentralrohr ist, das im oberen Bereich in Höhe des Dachreiteraufsatzes von einem Außenzylinder umschlossen ist, der den Wärmetauscher aufnimmt. Der Wärmetauscher ist durch einen Innenzylinder und einen Außenzylinder in radialer Richtung begrenzt. Die Innenleitwand und die Außenleitwand weisen fensterartige Ausnehmungen auf, wobei die in der Innenleit wand enthaltenen Ausnehmungen sich über die gesamte Höhe des Wärmetauschers erstrecken, während die in der Außenleitwand vorgesehenen Ausnehmungen sich nur über einen Teil der Höhe der Außenleitwand erstrecken. Die Wandung des Abluftschachtes stellt somit die innere Begrenzung des konzentrischen Wärmetauschers dar. Die beiden übereinander angeordneten schwenkbaren Absperrplatten dienen ausschließlich zur Absperrung des Innenzylinders. Im geschlossenen Zustand dieser Absperrplatten strömt die über den Stallboden angesaugte Abluft zunächst nach oben durch den Innenzylinder undweil dessen oberer Bereich gesperrt ist — durch den konzentrischen Wärmetauscher und anschließend wieder zurück in den Innenzylinder und ins Freie nach oben ab. Der Ventilator ist im Innenzylinder fest angeordnet und nicht umschaltbar. Bei einer derartigen Vorrichtung ist der Wärmetauscher muffenartig um den Abluftschacht herum angeordnet, was beim Einbau einen erheblichen Eingriff in das Gebäude erforderlich macht und beim Ausbau ebenfalls bauliche Änderungen verlangt.

Aufgabe der Erfindung ist es, eine derartige Wärmetauscher- und Lüftungsvorrichtung so weiterzubilden, daß mit möglichst einfachen Mitteln und möglichst geringem Konstruktionsaufwand ohne bauliche Veränderungen im vorhandenen Abluftschacht eine vorgefertigte Vorrichtung geschaffen werden kann, die einen einwandfreien Sommer- und Winterbetrieb sicherstellt.

Gemäß der Erfindung wird diese Aufgabe durch die Merkmale des Kennzeichens des Anspruches 1 gelöst. Weitere Ausgestaltungen der Erfindung sind Gegenstand der Unteransprüche.

Mit der Erfindung wird eine kombinierte Wärmetausch- und Lüftungsvorrichtung, die einen einwandfreien Winter- und Sommerbetrieb gewährleistet, mit extrem geringem Aufwand und auf besonders einfache und zweckmäßige Weise erzielt. Es ist lediglich erforderlich, die Rahmen- bzw. Schachtvorrichtung, die den Wärmetauscher aufnimmt, in zwei Durchgangskanäle bzw. Schachtabschnitte zu unterteilen, deren einer von dem Wärmetauscher ausgefüllt wird und deren anderer frei bleibt, d.h. einen ungehinderten Luftdurchtritt zuläßt, sowie eine Absperrvorrichtung in Form einer an einer Schachtwand befestigten Absperrplatte und einen Lüfter, der mit der Absperrplatte beweglich befestigt ist oder unabhängig von der Absperrplatte im Abluftkanal angeordnet ist, vorzusehen. Der Aufwand, den diese Mittel bedingen, ist verschwindend gering, insbes. sind die bauliche Ausgestaltung und der Einbau sehr einfach, da bauliche Veränderungen am Gebäude oder am Abluftschacht selbst nicht notwendig sind und Anpassungen an den Abluftschacht in der Fabrik, also an der vorgefertigten Vorrichtung, vorgenommen werden können.

Für den Sommerbetrieb wird der Teil des Abluftschachtes, der den Wärmetauscher, z.B. einen Wabentauscher enthält, gesperrt, während der andere Teil durch Öffnen der Absperrplatte in Betrieb genommen wird, so daß der Abluftventilator die Abluft nicht mehr durch den den Wärmetauscher aufnehmen den Schachtabschnitt, sondern durch den daneben ausgebildeten Schachtabschnitt unmittelbar nach außen fördert. Das Ausmaß der Lüftung kann durch stufenloses Verstellen der platte beliebig variiert werden, wobei die Platte manuell oder durch Stellmotor von einer Bedienungsperson betätigt oder aber das Öffnen und Schließen der Platte in Abhängigkeit von der Temperatur selbsttätig gesteuert werden kann.

Mit der erfindungsgemäßen Vorrichtung wird ferner erreicht, daß im Wärmetauschbetrieb, d.h. bei geschlossener Absperrplatte, eine Staubfalle erzielt wird, wenn die Form der Platte und die Ausgestaltung der Schachtwände, die gleich zeitig den Wärmetauscher abstützen, entsprechend gewählt wird. Nach dem Zyklon-Prinzip werden die schweren Staubteilchen mit einem geringen Luftanteil vom in den Wärmetauscher gelangenden Luftstrom abgelenkt, streichen an der Unterseite der geschlossenen Platte entlang, treten dann an entsprechenden, hierfür vorgesehenen Aussparungen in den an sich geschlossenen Abluftschacht und sammeln sich auf der Oberseite der Platte an, so daß sie von dort in eine separate Staubkammer zur Staubentnahme abgeführt werden können. Damit kann die Staubbelastung des Wärmetauschers wesentlich reduziert werden.

Der Wärmtauscher nach der Erfindung ist vorzugsweise aus einem dünnen Material bzw. einer starken Folie hergestellt, das bzw. die durch die den Wärmetauscher durchströmende Luft in Vibrationsbewegung versetzt wird, um den Reinigungseffekt der Wandungen des Wärmetauschers zu unterstützen. Dieser Reinigungseffekt ist ein Selbstreinigungseffekt, der sich aus der vertikalen Anordnung der Wärmetauscherkanäle nach der Erfindung ergibt, wobei der in den Kanälen angesammelte Staub sich von selbst löst und nach unten sinkt. Zur Unterstützung dieser Selbstreinigung werden vorzugsweise die Innenwände der einzelnen Kanäle des Wärmetauschers so ausgebildet, daß sie im spitzen Winkel zur Achsrichtung verlaufende Luftführungsrillen oder -kanäle aufweisen, so daß die in jedem einzelnen Kanal des Wärmetauschers vorhandene Luftsäule einen Drall erhält und die Luftsäule sich an den Ecken der Kanäle löst.

Die Luftführungsrillen oder -kanäle sind vorzugsweise im Querschnitt sägezahnförmig ausgebildet, wobei der ansteigende Teil des Sägezahnes stromabwärts und der abfallende Teil des Sägezahnes stromaufwärts liegt.

In weiterer Ausgestaltung der Erfindung wird vorgeschlagen, den Wärmetauscher als tiefgezogenes integrales Gehäuse auszugestalten, das als Ganzes an der Stalldecke bzw. im Kamin angeordnet ist, wobei die beiden Ventilatoren in dieses Tiefziehgehäuse integriert sind sowie alle für den späteren Einsatz der Ventilatoren erforderlichen Vorkehrungen (Halterungen, Anschlüsse) vorgesehen sind, ein Reinigungsdeckel für die Staubabführung vorhanden ist, usw..

Des weiteren wird der Erfindung vorgeschlagen, den oberen Abschluß der Durchströmkanäle des Wabentauschers gegen Hagel, Sonneneinstrahlung und dergl. dadurch zu schützen, daß auf das obere Ende des Wärmetauschers bzw. auf den Kamin eine den Wabentauscher überspannende Schutzplatte aufgesetzt wird, die Aussparungen für die nach oben offenen Kanäle aufweist. Die Schutzplatte ist vorzugsweise so ausgebildet, daß sie z.B. aus PVC besteht und Schlitze im Abstand der Durchflußkanäle besitzt. Die Stege zwischen den Schlitzen sind in spezieller Weise so gewölbt, daß sie das obere Ende der geschlossenen Kanäle übergreifen. Die Wölbungen mit etwa U-förmigem Querschnitt sind z.B. so geformt, daß das Material stärkster Krümmung wesentlich dicker ist (z.B. 4 mm) als an den auslaufenden Enden (z.B. 1 mm).

Vorzugsweise weist der Wärmetauscher mit senkrecht verlaufenden Durchströmkanälen an seinem äußeren Umfang einen vertikalen Rahmen bzw. Schacht auf, der durch Übereinanderstapeln von einzelnen Ringelementen erstellt wird, in die der Wärmetauscher anschließend eingesetzt und darin befestigt wird. Die Einzelelemente bestehen beispielsweise aus Kunststoffringen, die ähnlich wie Betonringe für Brunnenschächte übereinander gestapelt werden und damit den Schacht für den Wärmetauscher bilden. Auf diese Weise wird eine transportable, mit dem Stallgebäude befestigbare bzw. verbindbare schachtartige Wärmetauschvorrichtung erzielt, die auf einfache Weise eingesetzt und ebenso einfach entfernt und erforderlichenfalls an anderer Stelle wieder verwendet werden kann.

Nachstehend wird die Erfindung in Verbindung mit der Zeichnung anhand von Ausführungsbeispielen erläutert. Es zeigt:

Fig. 1 eine schematische Darstellung der erfindungsgemäßen Vorrichtung im Schnitt bei Betrieb des Wärmetauschers und geschlossenem Abluftschacht,

Fig. 2 die Darstellung nach Fig. 1 bei geöffnetem Abluftschacht und außer Betrieb genommenem Wärmetauscher,

Fig. 3 eine Darstellung entsprechend der Fig. 1, wobei der Abluftschacht für den Sommerbetrieb ebenfalls geschlossen ist, der Ventilator jedoch fest eingebaut ist,

Fig. 4 eine Darstellung ähnlich der nach Fig. 2 mit geöffnetem Abluftschacht für den Sommerbetrieb und starrer Anordnung des Ventilators wie in Fig. 3,

Fig. 5 eine Darstellung ähnlich der nach Fig. 3 mit zusätzlicher Staubfalle,

Fig. 6 eine schematische Darstellung des einstückigen Tiefziehteiles für das Gehäuse, im Schnitt,

Fig. 7 eine Seitenansicht eines Wabentauscherkanales in schematischer Darstellung,

Fig. 8 einen Wabentauscherkanal im Querschnitt,

Fig. 9 eine Seitenschnittansicht durch einzelne Wabentauscherkanäle mit aufgesetzter Schutzplatte, und

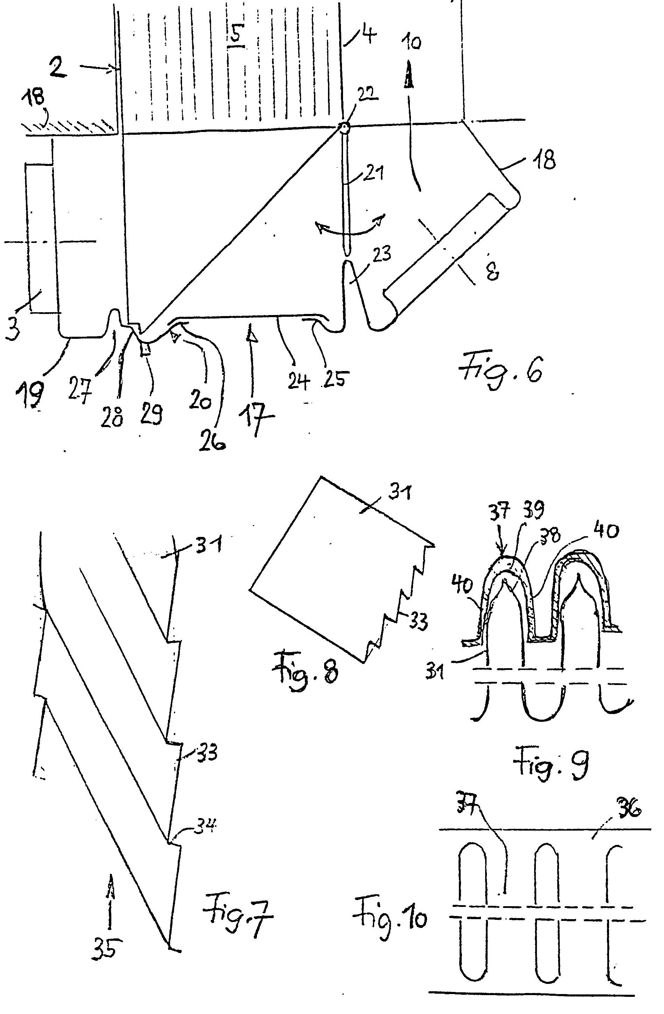

Fig. 10 die Schutzplatte nach Fig. 9 in Aufsicht.

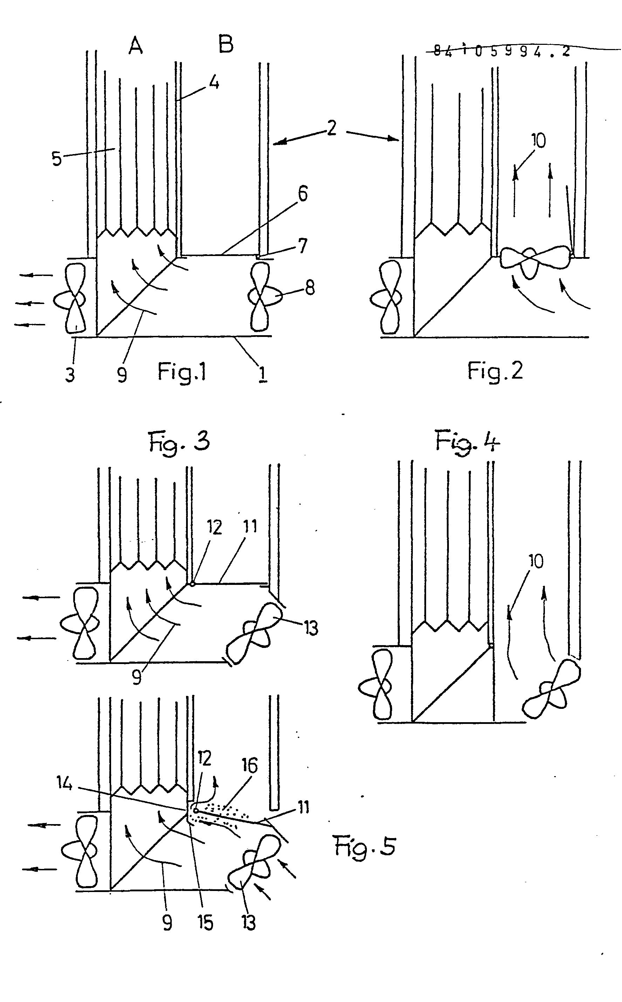

Bei der Darstellung nach Fig. 1 ist ein horizontaler Abluftkanal 1 an einen vertikalen Abluftschacht 2 angeschlossen, der aus einzelnen ringförmigen Abschnitten zusammengesetzt ist, die übereinander gestapelt sind. Am Ausgang des Abluftkanales 1 ist ein Ventilator 3 vorgesehen. Der Abluftschacht 2 weist eine den Schacht 2 in zwei Schachtabschnitte A und B teilende Wand 4 auf. Im Schachtabschnitt A ist der Wabenwärmetauscher 5 vorgesehen, der an den Begrenzungswänden befestigt ist, während der Schachtabschnitt B frei ist und einen ungehinderten Luftdurchtritt ermöglicht, wenn die Absperrvorrichtung 6 in Form einer Absperrplatte, die bei 7 an dem Schacht 2 gelenkig gelagert ist, geschlossen ist. Bei der Ausführungsform nach den Figuren 1 und 2 ist mit der Platte 6 ein Abluftventilator 8 befestigt, der zusammen mit der Klappe 6 verschwenkbar ist. Die geöffnete Stellung der Klappe 6 ist in Fig. 2 dargestellt. In Fig. 1, also bei geschlossener Platte 6, wird die Abluft 9 durch die Wirkung der Ventilatoren 3 und 8 durch den Wärmetauscher 5 geführt; dies stellt den Wärmetauscherbetrieb, d.h. den Winterbetrieb dar. In Fig.2 wird die gesamte Abluft in Richtung der Pfeile 10 von dem Ventilator 8 durch den Abluftschachtabschnitt 8 abgeführt. Dies stellt den Sommerbetrieb dar, bei dem keine Abluft durch den Wärmetauscher geführt wird, sondern der Wärmetauscher unwirksam ist.

Bei der Darstellung nach den Figuren 3 und 4, die im Prinzip der nach den Figuren 1 und 2 entspricht, ist anstelle des mit der Platte 6 befestigten Ventilators 8 eine Platte 11 vorgesehen, die an der Wand 4 bei 12 gelagert ist, und dieser Platte 11 ist ein ortsfester Ventilator 13 zugeordnet, der schräg in den Abluftkanal 1 eingesetzt ist und der bei geschlossener Platte die Abluft 9 durch den Wärmetauscher 5 führt, während (Fig. 4) bei offener Platte 11 die Abluft 10 im Sommerbetrieb durch den Schachtabschnitt 8 nach oben befördert wird.

In Fig. 5 ist die Ausführungsform nach Fig. 3 und 4 in der Weise weiterentwickelt, daß eine Staubfalle an der Absperrplatte 11 vorgesehen ist. Diese Staubfalle ist im Falle der Ausführungsform nach Fig. 5 so ausgebildet, daß an der Wand 4 im Bereich des Gelenkes 12 der platte 11 eine Luftführung 14, 15 an der Wand 4 vorgesehen ist, die den an der Unterseite der Platte 11 geführten Abluftstrom, der die wesentlichen Staubpartikel enthält, umlenkt und auf der Oberseite der Platte 11, wie bei 16 dargestellt, ablagert, von wo der Staub in eine Staubkammer abgeführt werden kann. Bei einer anderen, nicht dargestellten Ausführungsform wird die Staubfalle dadurch erzielt, daß die platte 11 im Falle der Fig. 3 mit Schlitzen versehen wird, die senkrecht zur Zeichenebene verlaufen, so daß die Staubabscheidung durch diese Schlitze erfolgen kann.

Die Wärmetausch und Lüftungsvorrichtung nach der Erfindung ist bei einer speziellen Ausführungsform der Erfindung, die in Fig. 6 dargestellt ist, in einem Gehäuse 17 angeordnet, das ein einteiliges Tiefziehbauteil ist. Dieses Gehäuse 17 mit den darin aufgenommenen Teilen der Wärmetausch- und Lüftungsvorrichtung wird an der Stalldecke D bzw. im Abluftschacht 2 bzw. Kamin festgelegt. Es besteht aus einem Abschnitt 19 zur Aufnahme des Ventilators 3, und einem mittleren Abschnitt 20. Der Abschnitt 18 ist durch eine Platte 21 von dem Abschnitt 20 getrennt. Die Platte 21 ist bei 22 gelenkig angeordnet. In ihrer geschlossen Stellung (dargestellt) wirkt sie mit einer Versteifung zwischen den Gehäuseabschnitten 18 und 20 so zusammen, daß der die Abluft 10 führende Kanal vom übrigen Teil getrennt ist. Im mittleren Abschnitt 20 ist ein lösbarer Deckel 24 vorgesehen, der an Nasen 25 und 26 anliegt. Dieser Deckel ist ein Reinigungsdeckel zum Entfernen von Staub und Verunreinigungen. Mit 27 ist im Abschnitt 19 eine Staunase dargestellt, die über eine Deformation 28 in den mittleren Abschnitt 20 übergeht, an dessen unterem Ende bei 29 ein Wasserablauf vorgesehen ist. Dieser Deformation 28 ist eine entsprechende Gegendeformation 30 an der unteren Begrenzung des Wärmetauschers 5 zugeordnet, die eine Arretierung des Wärmetauschers im Gehäuse darstellt.

In den Figuren 7 und 8 ist mit 31 ein einzelner Luftführungskanal des Wabentauschers 5 schematisch dargestellt. Dieser Kanal ist vorzugsweise quadratisch ausgebildet, kann jedoch auch dreieckförmig oder in einer anderen Querschnittsform ausgeführt sein. In den Wandungen eines derartigen Kanales sind schräg verlaufende Rillen bzw. Kanäle 32 vorgesehen, die sich vorzugsweise gleichmäßig über die gesamten Innenflächen der Kanäle erstrecken. Diese Kanäle werden durch im Querschnitt z.B. sägezahnförmige Verformungen 33 gebildet, wobei die Stirnwand 34 des Sägezahnes dem Luftstrom 35 zugewandt ist. Durch diese schrägen Rillen bzw. Kanäle wird der Luftstrom 35 in den einzelnen Durchflußkanälen so geführt, daß eine Verwirbelung eintritt, die der Ansammlung von Verunreinigungen in den Kanälen entgegenwirkt.

Das Material, aus dem die einzelnen Kanäle des Wabentauschers hergestellt sind, ist ein relativ dünnes Material, z.B. in Form einer dicken Folie. Da dieses Material, das aus Kunststoff besteht, durch Einwirkungen von außen, z.B. durch Hagel, durch Sonneneinstrahlung usw. erheblich beschädigt werden kann, hat es sich als zweckmäßig herausgestellt, den Wabentauscher auf der Oberseite des Kamines mit einer Schutzplatte 36 zu versehen, die rostartig ausgebildet ist, derart, daß die Stege 37 einer solchen Platte die äußeren Enden der geschlossenen Kanäle 38 des Wabentauschers übergreifen, so daß schädliche Einwirkungen vom Wärmetauscher selbst ferngehalten werden können. Sinnvoll ist es hierbei, die Stege der Schutzplatte etwa U-förmig auszubilden, wobei die Dicke dieser Schutzplatte im Krümmungsbereich des U (bei 39) wesentlich größer ist als an den Enden der Schenkel (bei 40), an denen die Beanspruchung naturgemäß erheblich geringer ist. Eine derartige Schutzplatte kann auf einfache Weise auf den Wärmetauscher von oben aufgesetzt und an ihm festgeklemmt, festgeschraubt oder in entsprechender Weise mit ihm verbunden sein.

**Patentansprüche**

1. Im Gegenstromprinzip arbeitende Wärmetausch- und Lüftungsvorrichtung for landwirtschaftliche Ställe mit Entlüftung, zur Nutzung der Wärmeenergie der verbrauchten, aus dem Stall abgeführten Abluft und zur Erwärmung der in den Stall eingeführten Frischluft, mit einem einen aus Wabenfolien besteheozen Wärmetauscher (5) aufweisenden Abluftschacht (2), der durch eine schwenkbare Absperrplatte (6) absperrbar ist und dem ein Ventilator (8) für die Abführung der Abluft am eintrittsseitigen Ende des Abluftschachtes zugeordnet ist, und mit einem neben dem und parallel zum Abluftschacht angeordneten Luftdurchströmkanal, der den Wärmetauscher (5) aufnimmt, dadurch gekennzeichnet,

a) daß der Abluftschacht (2) die gesamte äußere Wand der Vorrichtung bildet und durch eine ebene Trennwand (4) in zwei Schachtabschnitte (A und B) derart unterteilt ist, daß der eine Schachtabschnitt (A) den Luftdurchströmkanal und der andere Schachtabschnitt (B) den Abluftschachtabschnitt darstellt,

b) daß die Absperrplatte (6) zwischen zwei Stellungen einstellbar ist, deren eine den Abluftschachtabschnitt (B) schließt und den Strömungsweg zum anderen Schacht abschnitt (A) freigibt, und deren andere den Abluft schachtabschnitt (B) öffnet und die zwei Schachtabschnitte (A, B) voneinander und auch den Abluftventilator (8) von dem Schachtabschnitt (A) trennt,

c) und daß ein zusätzlicher Ventilator (3) für die Frischluftzufuhr am unteren Ende des Schachtabschnittes (A) angeordnet ist.

2. Vorrichtung nach Anspruch 1, dadurch gekennzeichnet, daß die Absperrplatte (6, 11) eine von Hand oder durch Servoantrieb verstellbare, vorzugsweise thermostatgesteuerte Klappe ist.

3. Vorrichtung nach Anspruch 1 oder 2, dadurch gekennzeich net, daß der Ventilator (8) mit der Absperrplatte (6) verbunden und zusammen mit ihr verschwenkbar ist.

4. Vorrichtung nach Anspruch 1 oder 2, dadurch gekennzeichnet, daß der Ventilator (13) ortsfest und schräg im Abluftkanal (1) angeordnet ist.

5. Vorrichtung nach einem der Ansprüche 1—4, dadurch gekennzeichnet, daß die Absperrplatte (6, 11) Öffnungen in Form von Schlitzen oder dergl. aufweist, die als Staubfalle im Wärmetauscherbetrieb bei geschlossener Platte wirksam sind, und daß den Schlitzen eine separate Staubkammer zugeordnet ist.

6. Vorrichtung nach einem der Ansprüche 1—5, dadurch gekennzeichnet, daß die Platte (11) und/ oder die Verkleidung bzw. Schachtwand (4) so ausgebildet ist, daß an der Platte (11) Staubabweisführungen (14, 15) vorgesehen sind, die im Abluftstrom enthaltene, an der Unterseite der Platte (11) entlangstreichende Staubpartikel auf die Oberseite der Platte (11) richten und damit aus dem Luftstrom (9) in den Wärmetauscher (5) absondern.

7. Vorrichtung nach Anspruch 1, dadurch gekennzeichnet, daß der Wärmetauscher (5) aus einem dünnen Material oder einer steifen Folie besteht, das bzw. die durch die durch den Wärmetauscher (5) strömende Luft in Vibrationsbewegung versetzt wird, um den Reinigungseffekt der Wandungen des Wärmetauschers zu unterstützen.

8. Vorrichtung nach Anspruch 7, dadurch gekennzeichnet, daß die Wandungen (31) des Wärmetauschers (5) im spitzen Winkel zur Achsrichtung verlaufende parallele Luftführungsrillen oder -kanäle (32) aufweisen.

9. Vorrichtung nach Anspruch 8, dadurch gekennzeichnet, daß die Luftführungsrillen oder -kanäle (31, 32) im Querschnitt sägezahnförmig (33, 34) ausgebildet sind, wobei der ansteigende Teil (33) des Sägezahnes stromabwärts und der abfallende Teil (34) des Sägezahnes stromaufwärts in bezug zur Luftströmungsrichtung (35) liegt.

10. Vorrichtung nach einem der Ansprüche 1—9, dadurch gekennzeichnet, daß sie ein tiefgezogenes, einteiliges Gehäuse (17) aufweist, das als Ganzes an der Stalldecke (18) bzw. im Abluftschacht (2) angeordnet bzw. festgelegt ist, und daß im Gehäuse die Ventilatoren (3, 8) sowie alle übrigen für den Betrieb der Vorrichtung erforderlichen Elemente und Anschlüsse integriert sind, derart, daß die Vorrichtung einbaufertig ist.

11. Vorrichtung nach einem der Ansprüche 1—10, dadurch gekennzeichnet, daß die obere Begrenzung des Wärmetauschers im Abluftschacht (2) mit einer abnehmbaren Schutzplatte (36, 37) versehen ist, die an den Stellen der oben offenen Wabentauscherkanäle (31) schlitzförmige Aussparungen aufweist, und daß die Stege (37) der Schutzplatte (36) im Querschnitt U-förmig ausgebildet sind, wobei die Dicke der Stege im gekrümmten Teil (39) größer ist als im nach unten auslaufenden geraden Teil (40).

**Revendications**

1. Dispositif combiné d'échange de chaleur et d'aération opérant à contre-courant pour des étables ou écuries d'une exploitation agricole avec une ventilation pour l'utilisation de l'énergie thermique de l'air sortant évacué de l'étable ou de l'écurie et pour le chauffage de l'air frais introduit, ayant une cheminée d'air sortant (2) comportant un échangeur de chaleur (5) constitué de feuilles nid d'abeilles, cheminée qui peut être obturée par une plaque d'obturation pivotable (6) et qui comporte un ventilateur (8) pour l'évacuation de l'air sortant à l'extrémité d'entrée de la cheminée d'air sortant, et ayant un canal de passage d'air disposé à côté de la cheminée d'air sortant et parallèlement à celle-ci, qui reçoit l'échangeur de chaleur (5), caractérisé

a) en ce que la cheminée d'air sortant (2) forme toute la paroi extérieure du dispositif et est divisée par une paroi de séparation plane (4) en deux parties de cheminée (A et B) de manière telle que la partie de cheminée (A) constitue le canal de passage d'air et l'autre partie de cheminée (B) constitue la partie de cheminée à air sortant,

b) en ce que la plaque d'obturation (6) est réglable entre deux positions dont l'une ferme la partie de cheminée d'air sortant (B) et libère le passage vers l'autre partie de cheminée (A) et l'autre ouvre la partie de cheminée à air sortant et sépare les deux parties de cheminée l'une de l'autre ainsi que le ventilateur d'air sortant (8) de la partie de cheminée (A),

c) et en ce qu'un ventilateur supplémentaire (3) pour l'amenée d'air frais est disposé à l'extrémité inférieure de la partie de cheminée (A).

2. Dispositif selon la revendication 1 caractérisé en ce que la plaque d'obturation (6, 11) est une trappe réglable à la main ou par servocommande, de préférence une trappe commandée par thermostat.

3. Dispositif selon la revendication 1 ou 2 caractérisé en ce le ventilateur (8) est assemblé à la plaque d'obturation (6) et peut pivoter ensemble avec celle-ci.

4. Dispositif selon la revendication 1 ou 2 caractérisé en ce que le ventilateur est fixe et est disposé obliquement dans le canal d'air sortant (1).

5. Dispositif selon l'une des revendications 1 à 4 caractérisé en ce que la plaque d'obturation (6, 11) présente des ouvertures sous forme de fentes ou analogues qui agissent comme piège à poussière dans le fonctionnement d'échangeur de chaleur lorsque la plaque est fermée et une chambre à poussière séparée est associée aux fentes.

6. Dispositif selon l'une des revendications 1 à 5 caractérisé en ce que la plaque (11) et/ou le revêtement ou la paroi de cheminée (4) sont agencés de manière telle qu'on prévoit à la plaque (11) des parties de guidage (14, 15) repoussant la poussière qui dirigent les particules de poussière contenues dans le courant d'air sortant, passant le long de la face inférieure de la plaque (11), vers la face supérieure de la plaque (11) et les séparent ainsi du courant d'air (9) vers l'échangeur de chaleur (5).

7. Dispositif selon la revendication 1 caractérisé en ce que l'échangeur de chaleur (5) est constitué d'un matériau mince ou d'une feuille rigide qui communique à l'air passant dans l'échangeur de chaleur (5) un mouvement vibratoire afin de soutenir l'effet de nettoyage des parois de l'échangeur de chaleur.

8. Dispositif selon la revendication 7 caractérisé en ce que les parois (31) de l'échangeur de chaleur (5) comportent des rainures ou des canaux de guidage d'air parallèles (32), formant un angle aigu avec la direction de l'axe.

9. Dispositif selon la revendication 8 caractérisé en ce que les rainures ou canaux de guidage d'air (31, 32) ont une section en dent de scie (33, 34), la partie ascendante (33) de la dent de scie étant disposée en aval et la partie descendante (34) de la dent de scie étant disposée en amont par rapport au sens de l'écoulement d'air (35).

10. Dispositif selon l'une des revendications 1 à 9 caractérisé en ce qu'il comporte une carcasse (17) d'emboutissage, en une pièce, qui est disposée ou fixée dans sa totalité au plafond de l'étable ou de l'écurie (18) ou dans la cheminée d'air sortant (2) et dans la carcasse sont intégrés les ventilateurs (3, 8) ainsi que tous les autres éléments et raccordements requis pour le fonctionnement du dispositif de manière telle que le dispositif soit prêt au montage.

11. Dispositif selon l'une des revendications 1 à 10 caractérisé en ce que la limite supérieure de l'échangeur de chaleur dans la cheminée d'air sortant (2) comporte une plaque de protection amovible (36, 37) qui présente des évidements en forme de fente aux emplacements des canaux d'échangeur en nid d'abeilles (31) ouverts vers le haut et les parties (37) de la plaque de protection (36) ont une section en U, l'épaisseur de ces parties dans la zone de courbure (39) étant supérieure à celle dans la portion droite (40) se terminant vers le bas.

## Claims

1. Countercurrent heat exchanging and ventilating system for ventilated agricultural stables, for using the heat energy of the consumed air discharged from the stable and for heating the fresh air drawn into the stable, comprising an exhaust air conduit (2) with a heat exchanger consisting of honeycomb foils, which conduit is lockable by means of a pivotable shut-off plate (6) and is associated with a ventilator (8) for removing the exhaust air at the entrance side of the exhaust air conduit, and furthermore comprising an air flow passage, which is arranged adjacent and parallel to the exhaust air conduit, and which receives the heat exchanger (5), characterised in

(a) that the exhaust air conduit (2) forms the entire outer wall of the system and is seperated by means of a straight seperation wall (4) into two conduit sections (A and B) in such a manner that the one conduit section (A) forms the air flow passage and the other conduit section (B) forms the exhaust air section,

(b) that the shut-off plate (6) is adjustable between two positions one of which closes the exhaust air conduit section (B) and releases the flow path to the other conduit section (A), and the other one opens the exhaust air conduit (B) and seperates the two conduit sections (A, B) from each other and also the exhaust air ventilator (8) from the conduit section (A),

(c) and that an additional ventilator (3) is arranged for supplying fresh air at the lower end of the conduit section (A).

2. System according to claim 1, characterised in that said shut-off plate (6, 11) is a flap, which is adjustable by hand or by a servo drive and preferably is thermostatically controlled.

3. System according to claim 1 or 2, characterised in that the ventilator (8) is connected with the shut-off plate (6) and is pivotable together therewith.

4. System according to claim 1 or 2, characterised in that the ventilator (13) is arranged stationary and inclined within the exhaust air conduit.

5. System according to one of claims 1—4, characterised in that said shut-off plate (6, II) is provided with openings, such as slots or the like, which act as a dust catch when the system operates as a heat exchanger with closed plate, and that a seperate dust chamber is associated to the slots.

6. System according to claim 1—5, characterised in that the plate (11) and/or the lining or alternatively the conduit wall (4) is formed in such a manner that dust rejection guides (14, 15) are provided at the plate (11), which direct any dust particles being included within the exhaust flow and moving along the underside of the plate (11) to the upper side of the plate (11) and accordingly seperate them from the air flow (9) into the heat exchanger (5).

7. System according to claim 1, characterised in that the heat exchanger (5) is made of very thin material or a stiff foil being vibrated by means of the air flowing through the heat exchanger (5) in order to support the cleaning effect of the walls of the heat exchanger.

8. System according to claim 7, characterised in that the walls (31) of the heat exchanger (5) are provided with parallel air directing grooves or channels (32) extending in an acute angle to the axial direction.

9. System according to claim 8, characterised in that said air guidance grooves or channels (31, 32) are of saw-tooth shaped cross section, the ascending part (33) of the tooth being arranged downstream and the descending part (34) of the tooth being arranged upstream in view of the direction (35) of the air flow.

10. System according to one of claims 1—9, characterised in that it is provided with a deep-drawn one-piece casing (17), which in its entirety is arranged resp. fastened to the ceiling (18) of the stable or within the exhaust air conduit (2), and that within the casing the ventilators (3, 8) and all elements and connections required for operating the system are integrated in such a manner that the system is ready to be installed.

11. System according to claims 1—10, characterised in that the upper restriction of the heat exchanger within the exhaust air conduit (2) is provided with a removable protection plate (36, 37), which at the points of the upwardly open honeycomb channels (31) has slot-like recesses, and that the webs (37) of the protection plate (36) are of U-shaped cross section, whereby the thickness of the walls within the curved portion (39) is larger than within the downwardly ending straight portion (40).

A   B

84 105 994.2

Fig.1

Fig.2

Fig. 3

Fig. 4

Fig.5

EP 0 129 101 B1

Fig. 6

Fig. 8

Fig. 9

Fig. 7

Fig. 10